# EUROPEAN PATENT APPLICATION

(11) **EP 4 704 214 A1**
(43) Date of publication of application: **04.03.2026**
(21) Application number: 25190376.1
(22) Date of filing: 18.07.2025
(51) Int. Cl.: H01M 10/42, H01M 50/553, H01M 50/555, H01M 50/588, H01M 50/591

(54) **INSULATION MEMBER, BATTERY PACK, AND METHOD FOR MANUFACTURING BATTERY PACK**

(30) Priority: 29.08.2024 KR 20240117225
(71) Applicant: SAMSUNG SDI CO., LTD., Yongin-si, Gyeonggi-do 17084 (KR)
(72) Inventor: KOH, Seok, 17084 Yongin-si (KR)
(74) Representative: Marks & Clerk LLP

(57) **Abstract**

An insulation member includes an insulating material shaped into a volumetric shape, and interior space inside the volumetric shape, wherein the volumetric shape does not cover a protection circuit module on a case of a battery pack, the volumetric shape covering a polarity pin electrically connected to the battery pack and exposed to an outside of the case.

## Description

### BACKGROUND

### 1. Field

Aspects of some embodiments relate to an insulation member, a battery pack, and a method for manufacturing a battery pack. In particular, Aspects of some embodiments relate to an insulation member that covers a polarity pin exposed to the outside of a case without covering a protection circuit module, a battery pack, and a method for manufacturing a battery pack.

### 2. Description of the Related Art

Unlike primary batteries that are not designed to be (re)charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly including a positive electrode and a negative electrode, a case that accommodates the electrode assembly, a terminal part connected to the electrode assembly, etc.

Such a secondary battery may be used in the form of a battery pack integrated with a circuit configuration for controlling charging/discharging operations. The battery pack may be provided with a protection circuit module (PCM) for effectively controlling abnormal operating states such as overcharge, overdischarge, and overcurrent in consideration of the stability of the secondary battery including a flammable material. **In** the battery pack, the PCM may be attached to a battery cell, and an insulation member may be attached to insulate the battery cell.

The above information disclosed in this Background section is for enhancement of understanding of the background of the present disclosure, and therefore, it may contain information that does not constitute related (or prior) art.

### SUMMARY

An insulation member according to an embodiment of the present disclosure need not cover a protection circuit module coupled to a case of a battery pack and disposed above the case, may be electrically connected to an electrode assembly of the battery pack, and cover a polarity pin exposed to the outside of the case.

In an embodiment, the insulation member may be formed with one or more coupling protrusions corresponding to one or more guide grooves formed in the protection circuit module.

In an embodiment, the insulation member may be formed therein with an accommodation space for accommodating the polarity pin.

A battery pack according to an embodiment of the present disclosure may include: an electrode assembly, a case for mounting or accommodating the electrode assembly, a polarity pin electrically connected to the electrode assembly and exposed to an outside of the case, a protection circuit module disposed above the case, and an insulation member on the case that does not cover the protection circuit module, but covers the polarity pin.

In an embodiment, the battery pack may further include an insulation layer formed on an upper part of the case and in a lower area where the protection circuit module and the insulation member are disposed, and formed in an area excluding the polarity pin.

In an embodiment, an adhesive surface may be formed on both sides of the insulation layer.

In an embodiment, the protection circuit module may be formed with one or more guide grooves.

In an embodiment, the insulation member may be formed with one or more coupling protrusions corresponding to the one or more guide grooves.

In an embodiment, the insulation member may be formed with an accommodation space therein for accommodating the polarity pin.

In an embodiment, the insulation member may be formed on the protection circuit module by molding.

In an embodiment, the case may include one or more protruding portions.

In an embodiment, the battery pack may further include a flange coupled to the one or more protruding portions and including one or more insertion holes into which a screw is inserted.

A method for manufacturing a battery pack according to an embodiment of the present disclosure may include: preparing an electrode assembly, coupling a polarity pin exposed to an outside to a case, electrically connecting a tab of the electrode assembly and the polarity pin, mounting the electrode assembly in the case, disposing a protection circuit module on an upper part of the case, and disposing an insulation member on the upper part of the case such that it does not cover the protection circuit module and covers the polarity pin.

In an embodiment, the method for manufacturing a battery pack may further include forming an insulation layer in an area excluding the polarity pin on the upper part of the case.

In an embodiment, the method for manufacturing a battery pack may further include forming an adhesive surface on both sides of the insulation layer.

In an embodiment, the disposing of the insulation member that covers the polarity pin may include coupling one or more coupling protrusions formed on the insulation member to one or more guide grooves formed in the protection circuit module.

In an embodiment, the method for manufacturing a battery pack may further include forming an accommodation space inside the insulation member to accommodate the polarity pin.

In an embodiment, the disposing of the insulation member that covers the polarity pin may include forming the insulation member on the protection circuit module by molding.

In an embodiment, the method for manufacturing a battery pack may further include forming one or more protruding portions in the case.

In an embodiment, the method for manufacturing a battery pack may further include coupling a flange coupled to the one or more protruding portions, the flange including one or more insertion holes into which a screw is inserted.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1A is a perspective view of a battery cell according to an embodiment;
FIG. 1B is an exploded perspective view of the battery cell in FIG. 1A;
FIG. 2 is a diagram illustrating a state before an insulation member is applied to a battery pack including the battery cell of FIG. 1A according to an embodiment of the present disclosure;
FIG. 3 is a diagram illustrating a state after an insulation member according to an embodiment of the present disclosure is applied to the battery pack of FIG. 2;
FIG. 4 is an enlarged view after the insulation member in FIG. 3;
FIG. 5 is a diagram illustrating a state before a flange is coupled to a protruding portion of a case of a battery pack according to an embodiment of the present disclosure;
FIG. 6 is a diagram illustrating a state in which a flange is coupled to a protruding portion of a case of a battery pack according to an embodiment of the present disclosure;
FIG. 7 is an enlarged view illustrating a state in which the flange is coupled to the protruding portion in FIG. 6; and
FIG. 8 is a flowchart of a method for manufacturing a battery pack according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

The embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of the embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The present disclosure will be described in detail with reference to the attached drawings.

Before describing the embodiment of the present disclosure, a secondary battery, e.g., a stainless use steel (SUS) can secondary battery, to which the present disclosure can be applied is first briefly described.

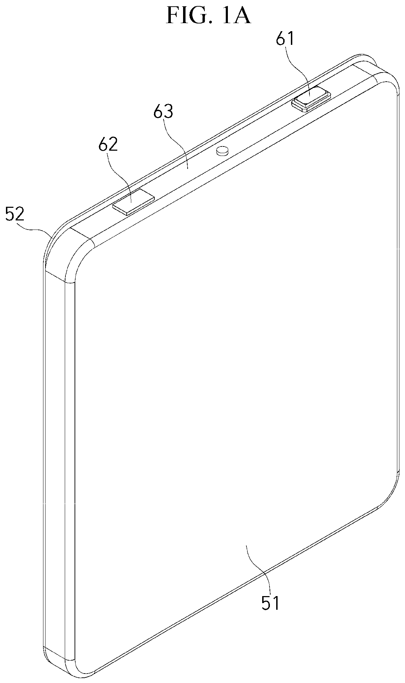

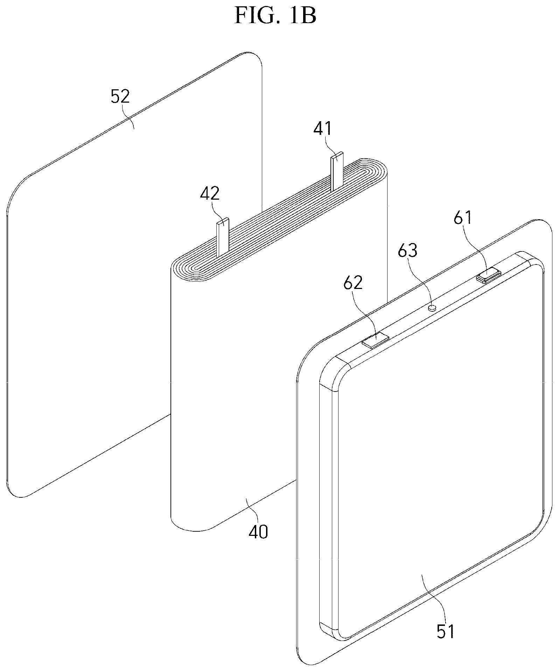

FIG. 1A is a perspective view of a battery cell according to an embodiment, and FIG. 1B is an assembled perspective view of the battery cell in FIG. 1A.

With reference to FIG. 1A, an external appearance of the secondary battery is first described.

Referring to FIG. 1A, a first case 51 and a second case 52 may form the overall appearance of the secondary battery and may be made of a conductive metal such as aluminum, an aluminum alloy, or nickel-plated steel. The first case 51 and the second case 52 may provide a space for accommodating an electrode assembly 40 (FIG. 1B). A first terminal 61 and a second terminal 62 may be electrically connected to a positive electrode or a negative electrode inside the secondary battery and may be installed to protrude outwardly by penetrating the first case 51. The first case 51 may be formed with an electrolyte injection port 63 in which a sealing cap may be installed.

With reference to FIG. 1B, the manufacturing process and an internal structure of the secondary battery in FIG. 1B are described.

Referring to FIG. 1B, a first electrode tab 41 and a second electrode tab 42 of the electrode assembly 40 may be welded to the first terminal 61 and the second terminal 62 of the first case 51 formed in a cup shape. Subsequently, the electrode assembly 40 may be put into the cup-shaped interior of the first case 51, and the second case 52 having a flat plate shape may be positioned to block an open side of the first case 51. Subsequently, welding may be performed on at least a part of an overlapping portion of the first case 51 and the second case 52, and a cutting process may be performed on some areas other than the welded portion, so that the secondary battery having the shape illustrated in FIG. 1A is obtained. Subsequently, an electrolyte may be injected through the electrolyte injection port 63 or additional processes such as charging and discharging may be performed, so that the manufacturing of the secondary battery is completed.

The secondary battery illustrated in FIG. 1B may include the electrode assembly 40, the first case 51, and the second case 52.

The electrode assembly 40 may be formed by winding or stacking a stack of a first electrode plate, a separator, and a second electrode plate, which are formed as plates or films. For example, when the electrode assembly 40 is a wound stack, a winding axis may be parallel to the longitudinal direction of the case. In another example, the electrode assembly 40 may also be a stack type rather than a winding type, e.g., where the electrode assembly 40 may be an electrode assembly in which a first electrode plate, a separator, and a second electrode plate are stacked in the thickness direction. In addition, one or more electrode assemblies may be stacked such that long sides of the electrode assemblies are adjacent to each other and accommodated in the case, and the number of electrode assemblies is not limited in the present disclosure. The first electrode plate of the electrode assembly 40 may act as a negative electrode, and the second electrode plate may act as a positive electrode, e.g., the reverse may also be possible.

The first electrode plate may be formed by applying a first electrode active material such as graphite or carbon to a first electrode current collector plate formed of a metal foil such as copper, a copper alloy, nickel, or a nickel alloy, and may include a first electrode tab 41 (or first uncoated portion) that is a region where the first electrode active material is not applied. The first electrode tab 41 may be a passage for current flow between the first electrode plate and the first terminal 61. In some examples, when the first electrode plate is manufactured, the first electrode tab 41 may be formed by being cut in advance to protrude to one side of the electrode assembly 40, or the first electrode tab 41 may protrude to one side of the electrode assembly 40 more than the separator without being separately cut.

The second electrode plate may be formed by applying a second electrode active material such as a transition metal oxide to a substrate formed of a metal foil such as aluminum or an aluminum alloy, and may include a second electrode tab 42 (or second uncoated portion) that is a region where the second electrode active material is not applied. The second electrode tab 42 may be a passage for current flow between the second electrode plate and the second terminal 62. In some examples, when the second electrode plate is manufactured, the second electrode tab 42 may be formed by being cut in advance to protrude to the other side of the electrode assembly 40, or the second electrode tab 42 may protrude to the other side of the electrode assembly 40 more than the separator without being separately cut.

In some embodiments, the first electrode tab 41 may be located on the upper right side of the electrode assembly 40, and the second electrode tab 42 may be located on the upper left side of the electrode assembly 40. Here, for convenience of description, the left and right sides are defined according to the secondary battery illustrated in FIG. 1B, and the positions thereof may change when the secondary battery is rotated left and right or up and down.

The separator prevents a short-circuit between the first electrode plate and the second electrode plate while allowing movement of lithium ions therebetween. The separator may be made of, for example, a polyethylene film, a polypropylene film, a polyethylene-polypropylene film, or the like.

In some embodiments, the electrode assembly 40 may be accommodated in the first case 51 and the second case 52 together with the electrolyte.

A case accommodating the electrode assembly 40 may have a first polarity, and a polarity pin exposed to the outside of the case may have a second polarity. The first polarity may have a positive or negative polarity, and the second polarity may have an opposite polarity.

A protection circuit module may be applied to the battery cell next to the polarity pin on the top (e.g., upper surface) of the case. If the entire case has one polarity and an insulation tape were to be attached to cover the entire protection circuit module, additional process work and material costs may be required to expose access to the protection circuit module (e.g., to expose a positive tab connected to the protection circuit module). In particular, if an insulation tape were to be attached to cover the entire protection circuit module, lack of uniform appearance, seams, and separation due to the flexibility of the tape may occur.

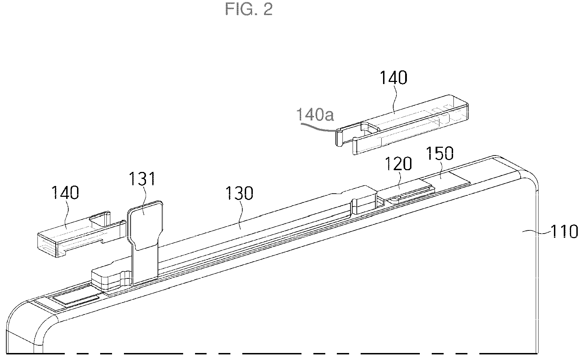

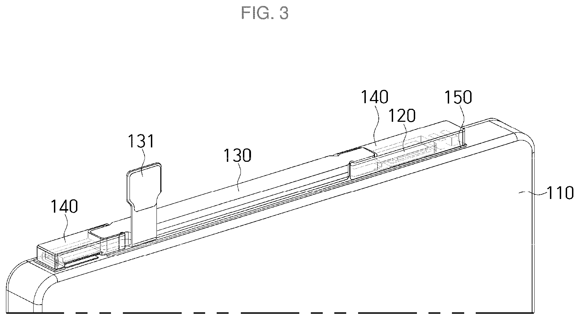

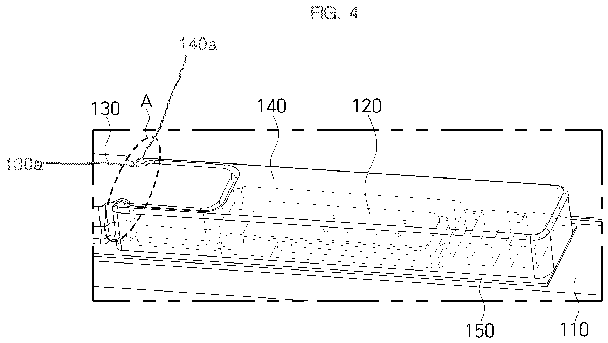

FIG. 2 is a diagram illustrating a state before an insulation member is applied to a battery cell according to an embodiment of the present disclosure, FIG. 3 is a diagram illustrating a state after an insulation member is applied to a battery cell according to an embodiment of the present disclosure, and FIG. 4 is an enlarged view of the insulation member on the battery cell of FIG. 3.

Referring to FIGS. 2 and 3, a secondary battery may include an insulation member 140, the electrode assembly 40 (FIG. 1B), a case 110 for mounting (e.g., accommodating) the electrode assembly 40, a polarity pin 120, a protection circuit module 130, and an insulation layer 150.

The case 110 may be formed by combining the first case 51 and the second case 52 at the front and back (FIG. 1B). The case 110 may form the overall appearance of a secondary battery, and may be made of a conductive metal such as aluminum, an aluminum alloy, or nickel-plated steel. The case 110 may provide a space where the electrode assembly is accommodated. The case 110 may include a first terminal and a second terminal that are electrically connected to a positive electrode or a negative electrode therein and protrude outwardly by passing through the case, and may be formed with an electrolyte injection port in which a sealing cap may be installed.

The polarity pin 120 may be electrically connected to the electrode assembly and may be exposed to the outside of the case 110. In an embodiment, the polarity pin 120 may be connected to the first terminal or the second terminal of the case 110. The polarity pin 120 may have an approximately rectangular shape and may have a polarity opposite to that of the case 110.

The protection circuit module 130 may be disposed on, e.g., above, the case 110, and may control the charging and discharging operation of a battery cell including the electrode assembly, the case 110, and the polarity pin 120, and may perform a protection operation of blocking a current flow and protecting the battery cell when an excessive current above a threshold value flows, when the temperature of the battery cell rises to a high temperature above a set value, or when overcharge or overdischarge occurs. For example, the protection circuit module 130 may be implemented with a printed circuit board (PCB) having a sensing circuit for detecting status information such as current and voltage, a charging and discharging protection circuit, a positive temperature coefficient (PTC) element for limiting charging and discharging current according to the temperature increase, and the like. The PCB may include a plurality of electrical elements, e.g., a charging and discharging switching element (FET), a capacitor, a resistor, and the like.

As illustrated in FIG. 2, the insulation member 140 may include an insulating material shaped into a volumetric shape with an interior space therein, e.g., an empty interior space. The insulation member 140 may be positioned on the case 110 (e.g., on a same surface as the protection circuit module 130) to cover the polarity pin 120. The insulation member 140 may not cover the protection circuit module 130, but may cover the polarity pin 120, thereby preventing a current of the battery cell (e.g., a current flowing through the case 110) from affecting the protection circuit module 130 and thus preventing a short circuit of the battery pack. For example, referring to FIGS. 2 and 3, the insulation member 140 may be external with respect to the protection circuit module 130 (e.g., the insulation member 140 may be completely outside the protection circuit module 130) to cover only a portion of a surface of the case 110 adjacent to the protection circuit module 130, e.g., so the insulation member 140 may completely cover only the polarity pin 120 among the protection circuit module 130 and the polarity pin 120. In an embodiment, the insulation member 140 may have an accommodation space formed inside so as to accommodate the polarity pin 120, e.g., so the insulation member 140 may overlap and completely cover all exposed surfaces of the polarity pin 120. As illustrated in FIGS. 2 and 3, the insulation member 140 may be composed of two insulation members 140 to cover a first polarity pin having a first polarity and a second polarity pin having a second polarity, e.g., the two insulation members 140 may be on opposite sides of the protection circuit module 130. The first polarity may be a positive polarity and the second polarity may be a negative polarity.

The insulation member 140 may be made of an insulation material, and may be manufactured, e.g., by an injection molding method. The insulation member 140 may be manufactured as a separate component through an injection molding method, or may be formed by performing direct molding on the protection circuit module 130. When the insulation member 140 is formed by performing direct molding on the protection circuit module 130, the insulation member 140 and the protection circuit module 130 may be more firmly combined. For example, referring to FIGS. 3-4, the insulation member 140 may be formed on (e.g., only on) a lateral side of the protection circuit module 130, such that a surface of the protection circuit module 130 facing away from the case 110 may be exposed.

In an embodiment, as indicated by an area A of FIG. 4, the protection circuit module 130 may be formed with one or more guide grooves 130a, and the insulation member 140 may be formed with one or more coupling protrusions 140a corresponding to (e.g., fitting into) the one or more guide grooves 130a. Accordingly, the insulation member 140 may be easily coupled to the protection circuit module 130, and separation thereof may be prevented.

The insulation layer 150 may be formed on an upper part of the case 110 (e.g., on an upper surface of the case 110 facing the protection circuit module 130). For example, the insulation layer 150 may be in a lower area where the protection circuit module 130 and the insulation member 140 are disposed (e.g., the insulation layer 150 may be between the upper surface of the case 110 and each of the protection circuit module 130 and the insulation member 140), and may be formed in an area excluding the polarity pin 120. The insulation layer 150 may be interposed between the case 110 and the protection circuit module 130 to mediate the coupling between the case 110 and the protection circuit module 130. For example, the insulation layer 150 may be fixed to the upper part of the case 110 so as to face the protection circuit module 130, and may be formed in an area excluding the polarity pin 120. In addition, the insulation layer 150 may extend to the lower area where the insulation member 140 is disposed and mediate the coupling between the case 110 and the insulation member 140. The insulation layer 150 may be formed with a pin hole for exposing the polarity pin 120. In an embodiment, the insulation layer 150 may be made of an insulation material for electrical insulation between the case 110 and the protection circuit module 130, and an adhesive surface may be formed on both sides of the insulation layer 150. For example, the insulation layer 150 may have an adhesive applied to both sides thereof. In another example, the insulation layer 150 may be formed of a double-sided tape.

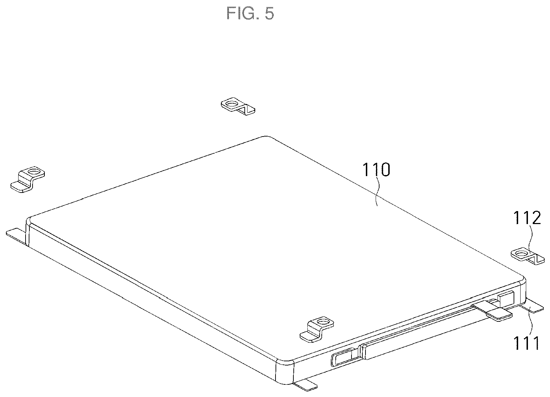

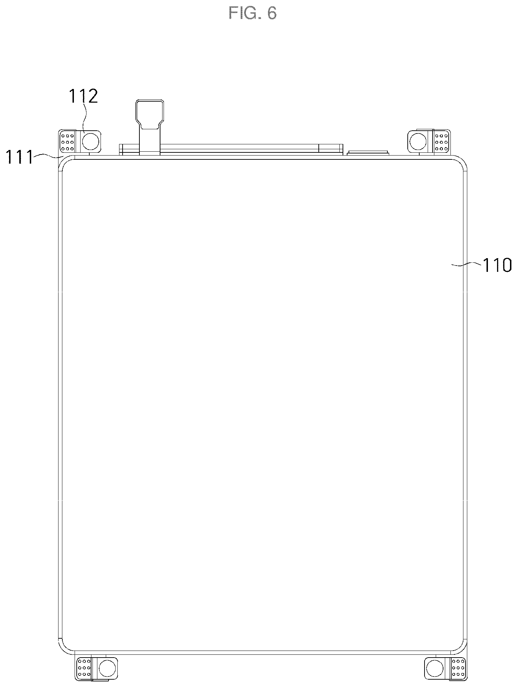

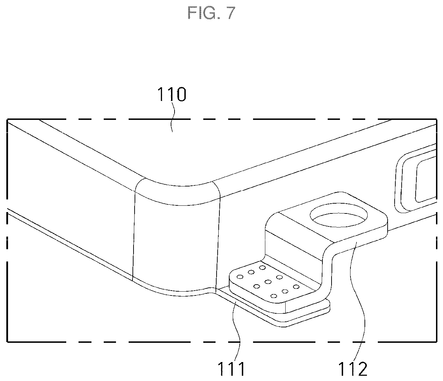

FIG. 5 is a diagram illustrating a state before a flange is coupled to a protruding portion of the case of the battery pack according to an embodiment of the present disclosure, FIG. 6 is a diagram illustrating a state in which the flange is coupled to the protruding portion of the case of the battery pack according to an embodiment of the present disclosure, and FIG. 7 is an enlarged view illustrating a state in which the flange is coupled to the protruding portion of the case in FIG. 6.

Referring to FIGS. 5 and 6, the case 110 of the battery pack according to an embodiment of the present disclosure may include one or more protruding portions 111. In such a case, a flange 112 having one or more insertion holes into which a screw is inserted (e.g., insertable) may be coupled (e.g., coupleable) to the one or more protruding portions 111.

If a method of directly welding a flange to the case were to be used (rather than a screw), due to a limitation in the position of the flange welding, welding work may not be easy and implementing various flange structures may be difficult. Further, direct welding of the flange to the case accommodating the electrode assembly may damage the electrode assembly.

In contrast, in the battery pack according to an embodiment of the present disclosure, the one or more protruding portions 111 may be formed in the case 110 to secure a welding area, and the flange 112 may be welded to the protruding portions 111. Accordingly, the flange 112 may be firmly coupled to the protruding portion 111, as illustrated in FIG. 7, thereby preventing damage to the electrode assembly due to welding and implementing various flange structures.

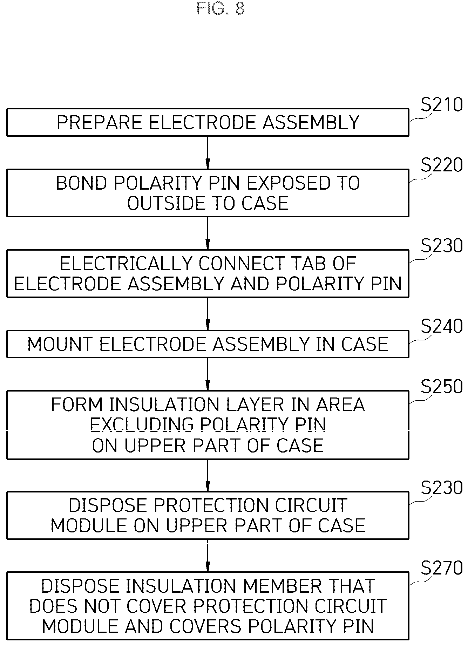

FIG. 8 is a flowchart illustrating a method for manufacturing a battery pack according to an embodiment of the present disclosure.

As illustrated in FIG. 8, a method for manufacturing a battery pack according to an embodiment of the present disclosure includes stages S210, S220, S230, S240, S250, S260, and S270.

Stage S210 includes preparing an electrode assembly.

Stage S220 includes coupling a polarity pin exposed to an outside of a case.

Stage S230 includes electrically connecting a tab of the electrode assembly and the polarity pin.

Stage S240 includes mounting the electrode assembly in the case.

Stage S250 includes forming an insulation layer in an area excluding the polarity pin on the upper part of the case. In an embodiment, the method for manufacturing the battery pack according to an embodiment of the present disclosure may further include forming an adhesive surface on both sides of the insulation layer.

Stage S260 includes disposing a protection circuit module on the upper part of the case.

Stage S270 includes disposing an insulation member that does not cover the protection circuit module and covers the polarity pin. In an embodiment, stage S270 may include coupling one or more coupling protrusions formed on the insulation member to one or more guide grooves formed in the protection circuit module. In another embodiment, stage S270 may include forming the insulation member on the protection circuit module by molding.

The method for manufacturing the battery pack according to an embodiment of the present disclosure may further include forming one or more protruding portions on the case and coupling a flange having one or more insertion holes into which a screw is inserted to the one or more protruding portions.

The method for manufacturing a battery pack according to an embodiment of the present disclosure described above has been described with reference to the flow chart presented in FIG. 8. For simplicity, the method has been illustrated and described as a series of blocks, but some of the illustrated blocks may occur in a different order or simultaneously with other blocks illustrated and described in the present specification, and various other branches, flow paths, and orders of blocks that achieve the same or similar results may be implemented. In addition, all the illustrated blocks may not be required for implementing the method described in the present specification.

In the description with reference to FIG. 8, each stage may be further divided into additional stages or combined into fewer stages, depending on the implementation example of the present disclosure. In addition, some stages may be omitted as needed, and the order between the stages may be changed. In addition, even in the case of other omitted content, the content of FIGS. 1A, 1B, and 2 to 7 may be applied to the content of FIG. 8. In addition, the content of FIG. 8 may be applied to the content of FIGS. 1A, 1B, and 2 to 7.

By way of summation and review, example embodiments provide an insulation member that covers a polarity pin exposed to the outside of a case without covering a protection circuit module, a battery pack, and a method for manufacturing a battery pack. That is, since the insulation member covers a polarity pin exposed to the outside of a case without covering a protection circuit module, it is possible to prevent a short circuit of a battery pack by insulating only the polarity pin portion without the need for covering the entire protection circuit module, and to reduce additional process work and material costs. Further, due to the insulation member formed to cover the polarity pin without covering the protection circuit module, the appearance formability and workability can be improved compared to a case where an insulation tape is attached to cover the entire protection circuit module. In addition, according to an embodiment of the present disclosure, since the case includes one or more protruding portions and a flange is coupled through the one or more protruding portions, it is not necessary to directly weld the flange to a battery cell surface, so that welding is easy, damage to the inside of a battery cell can be reduced, and rigidity can be secured.

However, the technical problems to be solved by the present disclosure is not limited to the above problems, and other problems not mentioned herein, and aspects and features of the present disclosure that would address such problems, will be clearly understood by those skilled in the art from the description of the present disclosure above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
an electrode assembly;
a case accommodating the electrode assembly;
a polarity pin electrically connected to the electrode assembly, the polarity pin being exposed to an outside of the case;
a protection circuit module on the case; and
an insulation member on the case, the insulation member covering only the polarity pin among the protection circuit module and the polarity pin.

2. The battery pack as claimed in claim 1, further comprising an insulation layer between the case and each of the protection circuit module and the insulation member, the insulation layer being in an area excluding the polarity pin.

3. The battery pack as claimed in claim 2, wherein the insulation layer includes an adhesive surface on opposite sides thereof.

4. The battery pack as claimed in claim 1, 2 or 3, wherein the protection circuit module includes one or more guide grooves.

5. The battery pack as claimed in claim 4, wherein the insulation member includes one or more coupling protrusions corresponding to the one or more guide grooves.

6. The battery pack as claimed in any one of claims 1 to 5, wherein the insulation member includes an accommodation space for accommodating the polarity pin.

7. The battery pack as claimed in any one of claims 1 to 6, wherein the insulation member is on the protection circuit module by molding.

8. The battery pack as claimed in any one of claims 1 to 7, wherein the case includes one or more protruding portions, optionally the battery pack further comprises a flange coupled to the one or more protruding portions, the flange including at least one insertion hole into which a screw is insertable.

9. A method for manufacturing a battery pack, the method comprising:
preparing an electrode assembly;
coupling a polarity pin exposed to an outside to a case;
electrically connecting a tab of the electrode assembly and the polarity pin;
mounting the electrode assembly in the case;
disposing a protection circuit module on an upper part of the case; and
disposing an insulation member on the upper part of the case, such that the insulation member covers only the polarity pin among the protection circuit module and the polarity pin.

10. The method for manufacturing a battery pack as claimed in claim 9, further comprising forming an insulation layer on the upper part of the case in an area excluding the polarity pin.

11. The method for manufacturing a battery pack as claimed in claim 10, further comprising forming an adhesive surface on both sides of the insulation layer.

12. The method for manufacturing a battery pack as claimed in claim 9, 10 or 11, wherein disposing the insulation member includes coupling one or more coupling protrusions formed on the insulation member to one or more guide grooves formed in the protection circuit module.

13. The method for manufacturing a battery pack as claimed in any one of claims 9 to 12, further comprising forming an accommodation space inside the insulation member to accommodate the polarity pin.

14. The method for manufacturing a battery pack as claimed in any one of claims 9 to 13, wherein disposing the insulation member includes forming the insulation member on the protection circuit module by molding.

15. The method for manufacturing a battery pack as claimed in any one of claims 9 to 14, further comprising forming one or more protruding portions in the case, and optionally further comprising coupling a flange to the one or more protruding portions, the flange including one or more insertion holes into which a screw is inserted.
